# EUROPEAN PATENT SPECIFICATION

(11) **EP 3 081 121 B1**
(45) Date of publication and mention of the grant of the patent: **06.09.2017**
(21) Application number: 14824560.8
(22) Date of filing: 02.12.2014
(51) Int. Cl.: A47J 31/36

(54) **EXTRACTION DEVICE OF SIMPLIFIED ACTUATION AND PROCESS OF OPERATION THEREOF**
EXTRAKTIONSVORRICHTUNG MIT VEREINFACHTER BETÄTIGUNG UND VERFAHREN ZUM BETRIEB DAVON
DISPOSITIF D'EXTRACTION À ACTIONNEMENT SIMPLIFIÉ ET SON PROCÉDÉ DE FONCTIONNEMENT

(30) Priority: 02.12.2013 PT 10733413
(43) Date of publication of application: 19.10.2016
(73) Proprietor: Novadelta-Comércio e Industria de Cafés, S.A., 1950-406 Lisboa (PT)
(72) Inventor: NABEIRO, Rui Miguel, P-7370-112 Campo Maior (PT)
(74) Representative: Ferreira Pinto, Francisca
(86) International application number: PCT/PT2014/000068
(87) International publication number: WO 2015/084199

(56) References cited:
- EP-A2- 2 218 368

## Description

### Field of the invention

The present invention refers to the field of extraction devices usually used in beverage preparation machines, such as for example espresso type coffee, tea and similar, from individual portion packages.

The present invention further refers to a process of operation of said extraction device.

### Background of the invention

The prior art includes many solutions of beverage preparation machines presenting an extraction device adapted for injecting upstream a pressurized fluid flow into portion packages and for collecting the resulting beverage downstream thereof. Said extraction device is typically provided so that two parts of device confine an extraction chamber adapted so as to collect said portion package when in an open position, and to impinge it in a fixed manner when in a closed position.

Document EP 1444932 B1 discloses an extraction device with displacement of a first part of device along a single linear direction relative to a second part of device. In particular, the actuation force of said first part of device is provided with linear actuation means of piston type that can be driven by hydraulic or electric means.

Document EP 1486150 B1 and alternative closing mechanism of an extraction device, in particular with a general arrangement of telescopic type comprising two parts, whereby at least one of said parts is provided linearly mobile along a linear direction, inwards and outwards from the machine main envelope.

Documents EP 2205133 B1, EP 2218368 A2, EP 2218369 A2 and EP 2218370 A2 disclose an extraction device of the same type housed inside of a front part of the main envelope of the beverage preparation machine. In particular, the arrangement that collects the capsule corresponds to a frontal part of the extraction device and can be displaced in substantially horizontal manner, relative to a water injection arrangement provided as a fixed rear part, whereby there is provided a pair of pins that engage in a pair of grooves presenting a configuration corresponding to a linear or helical movement. This solution contributes to an improved displacement of the capsule collecting part.

Said device further proposes that said front part of the extraction device is provided as an actuation handle and comprises in particular a beverage discharge adapted to serve as a manually graspable means. According to the proposed solution, when the front part carries out the helicoid movement to an open position, the beverage discharge results rotated relative to a vertical discharge orientation.

The disposition that collects the capsule presents a tubular cover and an internal capsule collection element that are attached to each other in fixed manner. Said tubular cover presents an opening that provides a passage for insertion of capsule. When in an open position, said collection and injection dispositions are spaced apart, and there is formed said passage between the first and the second. When in a closed position, said opening is rotated along a helical movement so that is gets closed by a closing part of the main envelope of the machine. This arrangement appears to minimize the risk of projection of dangerous hot liquid.

Said extraction device further comprises a capsule cage provided by a cylindrical box in the conduction support and adapted so that it can be moved in a piston-like manner, under the water pressure effect, so as to increase the tightness next to the edge of capsule.

There is therefore a need to provide an extraction device that provides actuation with simple and reliable driving means, bas well as ergonomic and intuitive by a user, including the sensorial perception of when a closed position is reached and the extraction device is effectively closed in safety, as well as auxiliary force means assisting the application of driving force.

### General description of the invention

The objective of the present invention is to provide an extraction device for use in a beverage preparation system, such as for example an espresso type coffee machine, adapted for preparation of beverages by means of extraction of an aromatic substance provided in individual portion packages, and that presents simpler actuation means providing an easier actuation by a user, including the perception of reliable retention in a closed position, as well as a simpler and more compact general construction.

This objective is solved according to the present invention by means of an extraction device according to claim 1.

An extraction device of the type of the present invention presents a first and second telescopic parts provided in a substantially cylindrical tubular form and in a general arrangement of telescopic type along a common longitudinal axis, adapted so that said first telescopic part can move in a given displacement extension along at least part of the extension of said telescopic part that is provided fixed, between an open position where it is at least in part further downstream and enables the introduction of a portion package, thereby confining a chamber-like space defined by said first and second telescopic parts and adapted for collecting said portion package, and vice-versa. Moreover, the extraction device is provided with means of direct application of a driving force, that is, without force multiplying mechanic means, including of the type lever, transmission gears, pistons or similar.

In particular, according to a first inventive aspect, said first and second telescopic parts are adapted so that said first telescopic part can carry out a translation movement along said common longitudinal axis along said displacement extension between said open position and closed position, and a rotation movement around said common longitudinal axis along one other part of said displacement extension so that it can be retained by blocking in the corresponding closed position, and vice-versa between said closed position and open position. This sequence of linear and rotation movements advantageously enables the user to gain a better perception of when said extraction device is in fact completely closed, and provides several possibilities in terms of blocking retention of said first telescopic part in the closed position.

In particular, according to another embodiment, said first and second telescopic parts are adapted so as to provide a translation movement in a displacement extension along the longitudinal direction of similar dimension, preferentially 1,4 times smaller than a characteristic dimension of said portion package, and so as to provide a rotation movement by at least one rotation angle adapted so as to provide to a user the perception of final position of movement, and preferentially to provide a retaining blocking of said first part in a closed position. These technical aspects of the extraction device according to the present invention advantageously provide a compact construction form and an actuation movement of reduced amplitude, simple and intuitive.

Moreover, according to another preferred embodiment, said first and second telescopic parts are adapted so that a driving force is applied directly upon said first telescopic part in manual or motorized manner, whereby said first telescopic part is provided in connection with at least one actuation element, provided as a handle or as an electric motor, for application or generation of said driving force.

According to another preferred embodiment, the extraction device is provided with auxiliary force means adapted so that they can generated a complementary force that automatically favours or resists to the movement of said first telescopic part under the action of said driving force along at least part of the longitudinal extension of said second telescopic part. According to a preferred embodiment, said auxiliary force means are provided in the form of elastic force means, for example a helical spring, and are preferentially provided inside of the volume defined by both chamber confining parts, for example disposed on the upstream zone of said second telescopic part so as to act upon said first telescopic part. Moreover, it is preferred when said actuation element is configured in cylindrical tubular form and presents a beverage discharge and preferentially an actuation element provided in operational connection with a control device of the beverage preparation machine and providing at least the function of start of beverage preparation cycle.

According to another embodiment, at least one of said first and second telescopic parts presents displacement guides respectively provided in the interior or exterior surface, and adapted so as to support the respective sliding displacement, whereby said displacement guides include a guide part developing in the longitudinal direction along part of said displacement extension, and at least a guide part developing in a cross direction along one other part of said displacement extension. Moreover, at least one of said first and second telescopic parts presents displacement guides including a guide part developing in a longitudinal direction along part of said displacement extension and branching into two guide parts developing in a cross direction, along similar radial directions, for example in the clock direction, or along different radial directions, along one other part of said displacement extension.

One other objective of the present invention is to provide a more effective process of operation of an extraction device, in particular of an extraction device according to the invention, in a beverage preparation system such as for example a beverage preparation machine.

This objective is attained according to the present invention by means of a process according to claim 12.

### Description of the Figures

The present invention shall now be described in greater detail based upon preferred embodiments and in the attached Figures.

The Figures show, in simplified schematic representations:
- Figures 1a - 1c:: side view and rear and front perspective views of an embodiment of an extraction device (1) according to the invention;
- Figures 2a - 2b:: perspective and side views expanded in their component parts, of the embodiment of extraction device (1) according to Figure 1;
- Figures 3a - 3c:: side views and side and top longitudinal cut views of the embodiment of extraction device (1) according to the invention, when in an open position (A);
- Figures 4a - 4c:: side views and longitudinal side and top cut views of the embodiment of extraction device (1) according to the invention, when in a closed position (B) .

### Detailed description of a preferred embodiment according to the invention

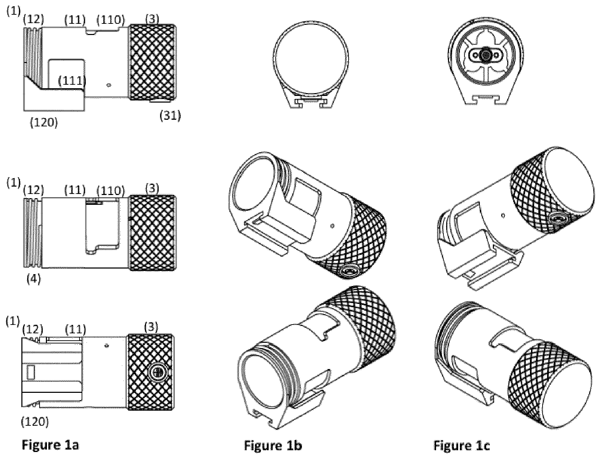

**Figures 1a** to **1c** represent exterior views of a first embodiment of an extraction device (1) according to the present invention.

Figures 1a represent side view (top), upside view (middle) and downside view (bottom). As one can observe, the extraction device (1) presents a telescopic-like arrangement including two telescopic parts (11, 12), provided in a substantially circular tubular form, whereby a first telescopic part (11) is provided so that it can be moved upstream and downstream relative to a second telescopic part (12) that is provided stationary, between an open position (A) and a closed position (B), and vice-versa.

Moreover, said first telescopic part (11) is configured so that it can be moved along a displacement extension outside of said second telescopic part (12), between said open position (A) and closed position (B) of the extraction device (1), and vice-versa, whereby said displacement extension corresponds at least approximately to a characteristic dimension of the portion package (2), such as for example its height. The extraction device (1) thus results in a particularly compact and simple constructive form.

According to a preferred embodiment, said second telescopic part (12) presents an engagement application (120) in its downward zone so that said extraction device (1) can be attached by means of pressured-fit union to a respective support provided in a structural part of the beverage preparation machine (not represented). This aspect is advantageous because it is thus avoided the use of attachment means of screw type or similar, and respective assembly effort.

Figures 1b and 1c are respectively rear and front perspective views of said extraction device (1).

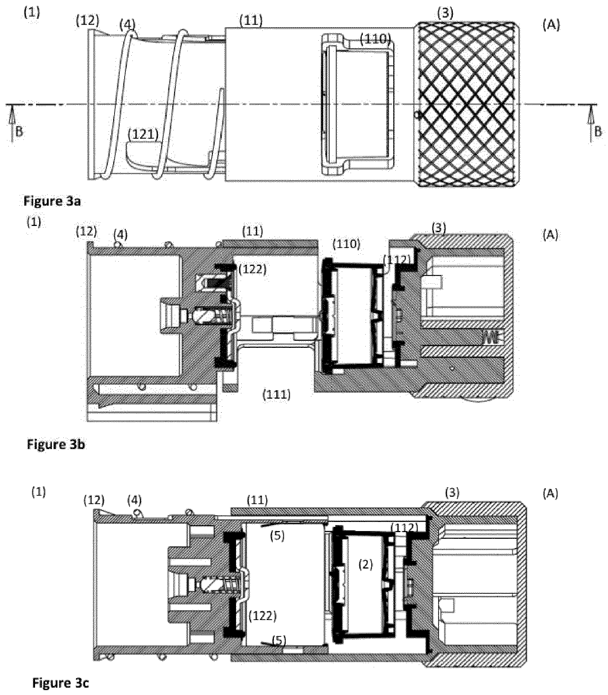

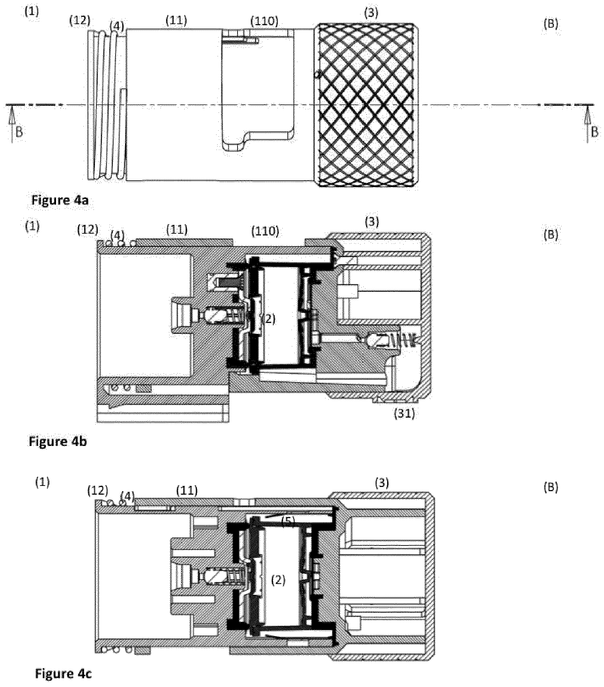

The operation of the extraction device (1) shall be explainer in greater detail further below, based upon Figures 3 and 4.

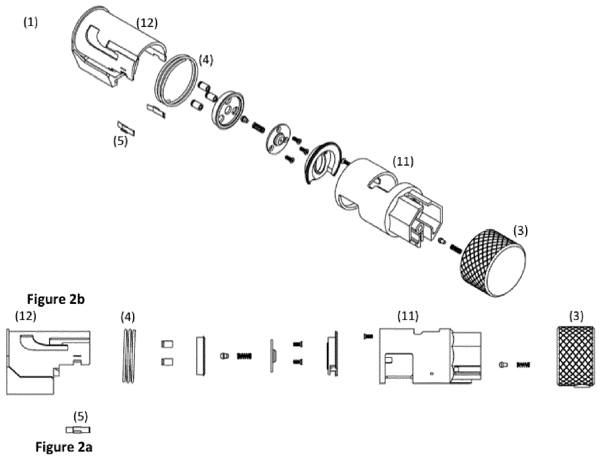

**Figures 2a** and **2b** are explored view representations of the preferred embodiment of the extraction device (1) according to Figure 1.

According to another preferred embodiment, said extraction device (1) is provided only with direct force transmission means, that is, without force amplifying means such as for example of the lever type, or transmission gears, or similar. The use of this type of force amplification means reduces the necessary driving force but leads to an increased construction volume and complexity.

Said first telescopic part (11) is thus provided so that, by means of applying a driving force towards upstream, it carries out a linear movement including at least a translation movement followed by a rotation movement between said open position (A) and closed position (B). Moreover, said driving force is applied manually and/or in motorized manner upon said first telescopic part (11), thereby generating a movement of said first telescopic part (11) between said open (A) and closed positions (B), and vice-versa. Moreover, said first and second telescopic parts (11, 12) are adapted so as to provide a translation movement in a displacement extension of similar dimension to a characteristic dimension of said portion package (2), and to provide a rotation movement at least along a rotation angle adapted to provide to a user the perception of final movement position and preferentially to provide the blocking of said first telescopic part (11) in a closed position (B).

According to a preferred embodiment, said first telescopic part (11) is provided in connection with one actuation element (3) configured for application of a driving force, i.e., as an actuation handle of said first telescopic part (11). Moreover, said actuation element (3) is preferentially configured in form of handle for application of a manual force, and further presents a beverage discharge (31) in fluid connection with a beverage collection from the interior volume defined by said telescopic parts (11, 12).

According to another preferred embodiment, said discharge part (3) further includes an actuation device in functional connection with a control device of the machine (one abdicates in this case from describing or representing said elements because these are known in prior art), so that a given actuation movement and/or position of the actuation element (3) can start the cycle of beverage preparation.

As one can observe, the extraction device (1) further comprises auxiliary force means (4), including of spring or bumper type, so as to generate a force contrary to the movement between said open (A) and closed position (B), and a force favourable in the reverse movement. Said driving force of the extraction device (1) can be applied manually or in motorized manner.

Besides of the aforementioned component parts, it is possible to identify others relating to the tight sealing of the extraction chamber confined by said telescopic parts (11, 12), as well as upstream pressurized fluid injection means and beverage discharge means downstream thereof. Because they are components already known in prior art, one abdicates from their detail description.

**Figures 3a** to **3c** represent the preferred embodiment of the extraction device (1) according to the present invention, when in an open position (A).

As one can observe, said first telescopic part (11) presents an entry opening (110) adapted for introduction of a portion package (2) (not represented in this drawing), provided in its upward downstream zone, and an exit opening (111) for discharge of said individual portion package (2) after a respective extraction. It thus results that said first telescopic part (11) provides support to said portion package (2) while the latter is inside of the extraction device (1), without having to provide passage openings in more than one telescopic part.

As one can verify from Figure 3a, in this open position (A) it is possible to introduce a portion package (2) through the respective entry opening (110) provided in the upward downstream zone of said first telescopic part (11). As it can be observed in the drawing, the entry opening (110) is in this case disposed centred relative to its central longitudinal axis, oriented along a first direction.

In this position the auxiliary force means (4), in this case provided as helicoid spring, exert a respective minimum elastic force upon said first telescopic part (11) .

As one can observe, said first telescopic part (11) is thus adapted so as to collect and conduct the portion package (2) between said open (A) and closed positions (B), whereas said second telescopic part (12) is adapted so as to serve as stationary structure of support to the displacement of said first telescopic part (11) between said open (A) and closed positions (B), and vice-versa.

Moreover, in the case of this embodiment, said second telescopic part (12) is further provided with engagement guides (121), configured for example in manner of sliding grooves, on its exterior surface. These engagement grooves (121) engage with corresponding means provided on the interior surface of said first telescopic part (11), so as to guide the movement thereof between said open (A) and closed position (B), and vice-versa. As further to observe, said engagement guides (121) are provided developing along the longitudinal extension of said second telescopic part (12), and in its upstream edge are provided with a cross part relative to said longitudinal part, so that by means of a rotation of said first telescopic part (11) the latter can be retained in the corresponding in the closed position (B), and vice-versa. As it results evident, when said first telescopic part (11) is in the closed position (B), it is also submitted to a maximum actuation force by said auxiliary force means (4).

The process of operation of the represented extraction device (1) therefore includes, from the represented open position (A), the manual application of an actuation force upon the actuation element (3), so as to first convey a translation movement, in the upstream direction and against the elastic force exerted by said auxiliary force means (4), until that said portion package (2) is retained in the chamber confined by said telescopic parts (11, 12).

As it can be verified from Figure 3b (longitudinal side-cut view B-B), the portion package (2) gets retained in support upon an inferior zone of said first telescopic part (11).

As one can observe in Figure 3c (longitudinal top cut view), there are further provided ejection means (5) inside of the chamber confined by said telescopic parts (11, 12), adapted so that only enable the passage of the portion package (2) along the upstream direction. In the case of the represented embodiment, said ejection means (5) are provided as curved lamellas that enable the movement of an individual portion package (2) approaching the upstream confining section (122) of said second telescopic part (12), during the closing movement in the upstream direction, but then prevent it from jointly moving back with said first telescopic part (11) during the opening movement in the downstream direction, and thereby causing its exit through said exit opening (111). Moreover, the upstream confining section (122) of said second telescopic part (12) is provided with pressurized fluid injection means and the downstream confining section (112) of said second telescopic part (11) is provided with beverage collection means in fluid connection with the beverage discharge (31).

**Figures 4a** to **4c** correspond to the views of Figures 3a to 3c and represent the preferred embodiment of the extraction device (1) according to the present invention when in the closed position (B), that is, when in position of extraction of a beverage from an individual portion package (2).

As it can be verified from Figure 4a, in this closed position (B), the portion package (2) is retained in the chamber defined by said telescopic parts (11, 12). As one can further observe, the entry opening (110) is in this case laterally decentred relative to its central longitudinal axis, as a result from the rotation movement after the translation movement as aforementioned, for retention of said first telescopic part (11) in the closed position (B). Moreover, said auxiliary force means (4) is compressed, so that the latter exerts a respective maximum elastic force upon said first telescopic part (11) .

Figure 4b shows the portion package (2) retained in the chamber defined by the telescopic parts (11, 12), including the pressurized fluid injection means disposed upstream, provided in said second telescopic part (12), and the beverage discharge means disposed downstream, provided in fluid connection with the actuation element (3) and respective beverage discharge (31).

Figure 4c shows the extraction device (1) in the closed position (B) in a top view. As it can be observed, there are provided ejection means (5) that interact with a construction part of said portion package (2), for example the edges of a lid zone, so as to prevent the latter of jointly moving with said first telescopic part (11) on the occasion of the reverse movement, from the closed position (B) to the open position (A), and thus falls through the exit opening (111) that thereby results aligned underneath the portion package (2) during said reverse movement.
Lisbon, January 13rd 2017

## Claims

1. Extraction device (1) adapted for preparation of beverages from at least one edible substance contained in a portion package (2), and presenting a telescopic-like arrangement including a first and second telescopic parts (11, 12) of substantially cylindrical tubular form along a longitudinal axis, adapted so that said first telescopic part (11) can be displaced along a displacement extension along the longitudinal direction, at least in part along at least part of the extension of said second telescopic part (12) that is provided fixed, between an open position (A) where it is at least in part further downstream, and a closed position (B), and thereby define a chamber-like space adapted for collecting said portion package (2), and vice-versa, **characterized**
**in that** said first and second telescopic parts (11, 12) are adapted so that, between said open (A) and closed (B) positions, said first telescopic part (11) can carry out a sequence of a translation movement along said displacement extension along the longitudinal direction, and a rotation movement around said common longitudinal axis, so that it can be retained by means of blocking in the corresponding closed position (B), and vice-versa between said closed position (B) and open position (A).

2. Extraction device (1) according to claim 1, **characterized in that** said first and second telescopic parts (11, 12) are adapted so as to provide a translation movement in a displacement extension along the longitudinal direction of similar dimension, preferentially 1,4 times smaller than a characteristic dimension of said portion package (2), preferentially smaller than 30 mm.

3. Extraction device (1) according to claim 1 or 2, **characterized in that** said first and second telescopic parts (11, 12) are adapted so as to provide a rotation movement of said first telescopic part (11) by at least one rotation angle that is adapted so as to provide to a user the perception of final position of movement, preferentially a rotation angle of at most 100°, thereby providing a retaining blocking of said first telescopic part (11) in a closed position (B) in which said first telescopic part (11) is rotated relative to said translation movement.

4. Extraction device (1) according to claims 1 to 3, **characterized in that** said first and second telescopic parts (11, 12) are adapted so that a driving force is applied directly upon said first telescopic part (11) in manual or motorized manner, whereby said first telescopic part (11) is provided in connection with at least one actuation element (3), provided as a handle or as an electric motor, for application or generation of said driving force.

5. Extraction device (1) according to claim 4, **characterized in that** it is provided with auxiliary force means (4) adapted so that they can generate a complementary force that automatically favours or resists the movement of said first telescopic part (11) under the action of said driving force along at least part of the longitudinal extension of said second telescopic part (12).

6. Extraction device (1) according to any one of claim 5, **characterized in that** it is adapted so that by means of applying a driving force directly upon said first telescopic part (11), the latter moves from upstream between the open position (A) and the closed position (B), against the complementary force generated by said auxiliary force means (4), and by means of applying a driving force directly upon said first telescopic part, the latter moves downstream between said closed position (B) and the open position (A), along with the complementary force generated by said auxiliary force means (4).

7. Extraction device (1) according to any one of claims 1 to 6, **characterized in that** at least one of said first and second telescopic parts (11, 12) presents displacement guides (121) respectively provided in the interior and exterior surfaces, whereby said displacement guides (121) include a guide part developing along the longitudinal direction along part of said displacement extension, and at least one guide part developing along a cross direction along another part of said displacement extension.

8. Extraction device (1) according to any one of claims 1 to 7, **characterized in that** at least one of said first and second telescopic parts (11, 12) presents displacement guides (121) including a guide part developing along a longitudinal direction along part of said displacement extension and branching into two guide parts developing along a cross direction, along similar radial directions, for example along the clock direction, or along different radial directions, along another part of said displacement extension.

9. Extraction device (1) according to any one of claims 1 to 8, **characterized in that** said first telescopic part (11) is provided, in its downstream part oriented upwards, with an entry opening (110), adapted so as to enable the introduction of a portion package (2), and is provided in its upstream part oriented downwards with an exit opening (111), adapted so as to enable the exit of said portion package (2).

10. Extraction device (1) according to claim 9, **characterized in that** said first telescopic part (11) is configured so that it can receive a portion package (2) through a respective entry opening (110), when in said open position (A), and can be moved along at least part of the exterior surface of said second telescopic part (12), until a closed position (B) where the portion package (2) is fixed by the upstream confining section (122) of said second telescopic part (12) provided with pressurized fluid injection means, and by the downstream confining section (112) of said first telescopic part (11), provided with beverage collection means and in fluid connection with the beverage discharge (31), and **in that** said second telescopic part (12) presents retention means (5) adapted so that they enable the passage of said portion package (2) in a movement in the upstream direction, to a position of proximity of the upstream confining section (122) of said telescopic part (12).

11. Extraction device (1) according to any one of previous claims, **characterized in that** said first telescopic part (11) is adapted for connection to an actuation element (3), configured in cylindrical tubular form and presenting a beverage discharge (31) and preferentially an actuation element provided in operational connection with a control device of the beverage preparation machine and at least providing the function of start of beverage preparation cycles.

12. Process of operation of an extraction device (1) provided for extraction of an individual portion package (2) in a system (20) for preparing beverages, including the following steps:
- providing an extraction device (1) presenting a first and second telescopic parts (11, 12) in an open position (A);
- introducing a portion package (2) through an entry opening (110) provided on said first telescopic part (11) so that it results in proximity of a respective downstream confining section (112);
- applying a driving force upon said first telescopic part (11) so that said first telescopic part (11) is moved between the open position (A) and the closed position (B), along at least part of said second telescopic part (12), thereby impinging said portion package (2) in fixed manner against an upstream confining section (122) of said second telescopic part (12),
- supplying a pressurized fluid flow through said upstream confining section (122) of said second telescopic part (12),
- collecting the resulting beverage through said downstream confining section (112) of said first telescopic part (11),
**characterized in that** said application of driving force generates a linear movement followed by a rotation movement of said first telescopic part (11) provided in telescopic arrangement with a second telescopic part, along a movement in general upstream direction.

13. Process according to claim 12, **characterized in that** the application of driving force includes a rotation movement of said first telescopic part (11) around its central longitudinal axis, in the final zone of the movement path, so as to provide a mechanic blocking thereof in the closed position (B), and vice-versa.

14. Process according to claims 12 or 13, **characterized in that** it further includes the following steps:
- applying a driving force upon said first telescopic part (11) so as to generate a rotation movement followed by a linear movement along a general downstream movement, so that said first telescopic part (11) is moved between the closed position (B) and the open position (A), thereby bringing the exit opening (111) underneath said portion package (2),
- retaining said portion package (2) in the position of proximity of the upstream confining section (122) of said second telescopic part (12), by means of retaining means (5);
- ejecting said portion package (2) by means of the gravity force through said exit opening (111) provided in the inferior zone of said first telescopic part (11).

15. Process according to claims 12 to 14, **characterized in that** it further includes the step of rotating said first telescopic part (11) around its central longitudinal axis, so as to retain it in the closed position (B) against the action of an auxiliary force means (4) provided upstream thereof, and vice-versa.

## Patentansprüche

1. Anzapfgerät (1) angepasst zur Zubereitung von Getränken von mindestens einer essbaren Substanz enthalten in einer Dosispackung (2) und stellt eine teleskopartige Anordnung dar, einschließend einen ersten und zweiten Teleskopteile (11, 12) wesentlich von zylindrischer Röhrenform entlang einer Längsachse so angepasst, dass der erste Teleskopteil (11) entlang einer Verschiebungserweiterung entlang der Längsrichtung verschoben werden kann, mindestens teils entlang mindestens der Erweiterung von genanntem zweiten Teleskopteil (12), der befestigt vorhanden ist, zwischen einer offenen Position (A), wo es mindestens teils weiter stromabwärts ist, und einer geschlossenen Position (B), und die dabei einen zimmerartigen Raum angepasst zur Ansammlung von genannter Dosispackung (2), und umgekehrt definieren, **dadurch gekennzeichnet, dass** genannte erste und zweite Teleskopteile (11, 12) so angepasst sind, dass zwischen genannter offenen (A) und geschlossenen (B) Positionen genannter erster Teleskopteil (11) eine Sequenz von Translationsbewegung entlang genannter Verschiebungserweiterung entlang Längsrichtung durchgeführt werden kann, und einer Drehungsbewegung um genannter Längsachse, so dass es mittels Blockierung in der entsprechenden geschlossenen Position (B) und umgekehrt zwischen genannter geschlossenen Position (B) und offenen Position (A) festgehalten werden kann.

2. Anzapfgerät (1) gemäß Anspruch 1 **dadurch gekennzeichnet, dass** genannter erste und zweite Teleskopteile (11, 12) so angepasst sind, um eine Translationsbewegung in einer Verschiebungserweiterung entlang der Längsrichtung von ähnlicher Größe zu versorgen, vorzugsweise 1,4 mal kleiner als einer dimensionalen Größe von genannter Dosispackung (2), vorzugsweise kleiner als 30 mm.

3. Anzapfgerät (1) gemäß Anspruch 1 oder 2 **dadurch gekennzeichnet, dass** genannter erster und zweiter Teleskopteile (11, 12) so angepasst sind, um eine Drehungsbewegung von genanntem ersten Teleskopteil (11) um mindestens einen Drehungswinkel zu versorgen, der so angepasst ist, um einem Benutzer den Eindruck einer Bewegungsposition zu liefern, vorzugsweise einem Drehungswinkel von mehrheitlichen 100%, wobei eine festgehaltene Blockierung von genanntem ersten Teleskopteil (11) in einer geschlossenen Position (B), wobei der erste Teleskopteil (11) entsprechend der genannten Translationsbewegung gedreht wird.

4. Anzapfgerät (1) gemäß Ansprüche 1 bis 3 **dadurch gekennzeichnet, dass** genannter erster und zweiter Teleskopteile (11, 12) so angepasst sind, dass eine Antriebskraft direkt an genanntem ersten Teleskopteil (11) in manueller oder motorischer Weise angewendet ist, wobei genannter erster Teleskopteil (11) in Verbindung mit mindestens einem Betätigungselement (3) vorhanden ist, vorhanden als ein Griff oder ein Elektromotor, zur Anwendung oder Erzeugung von genannter Antriebskraft.

5. Anzapfgerät (1) gemäß Anspruch 4 **dadurch gekennzeichnet, dass** es mit Hilfskraftmittel (4) vorhanden so angepasst ist, um eine Zusatzkraft zu erzeugen, die automatisch die Bewegung von genanntem ersten Teleskopteil (11) unter der Tätigkeit von genannter Antriebskraft entlang mindestens einem Teil der Längserweiterung von genanntem zweiten Teleskopteil (12) bevorzugt oder widersteht.

6. Anzapfgerät (1) gemäß einem der Ansprüche 5 **dadurch gekennzeichnet, dass** es so angepasst ist, dass mittels direkter Anwendung einer Antriebskraft auf genanntem ersten Teleskopteil (11) der Letztere sich von stromaufwärts zwischen der offenen Position (A) und der geschlossenen Position (B) bewegt, gegen der Zusatzkraft erzeugt von genanntem Hilfskraftmittel (4), und mittels direkter Anwendung einer Antriebskraft auf genanntem ersten Teleskopteil, der Letztere bewegt sich stromabwärts zwischen der genannten geschlossenen Position (B) und der offenen Position (A), entlang der Zusatzkraft , die von genanntem Hilfskraftmittel (4) erzeugt wird.

7. Anzapfgerät (1) gemäß einem der Ansprüche 1 bis 6 **dadurch gekennzeichnet, dass** mindestens ein von genannten ersten und zweiten Teleskopteile (11, 12) Verschiebungsführungen (121) darstellt, vorhanden jeweils in den Inner- und Außenoberflächen, wobei genannte Verschiebungsführungen (121) einen Führungsteil einschließt, der sich entlang der Längsrichtung entlang teils genannter Verschiebungserweiterung entwickelt, und mindestens einen Führungsteil, der sich entlang eine Kreuzrichtung entlang einem anderen Teil von genannter Verschiebungserweiterung entwickelt.

8. Anzapfgerät (1) gemäß einem der Ansprüche 1 bis 7 **dadurch gekennzeichnet, dass** mindestens ein von genannten ersten und zweiten Teleskopteile (11, 12) Verschiebungsführungen (121) darstellt, einschließend ein Führungsteil, der sich entlang einer Längsrichtung entlang teils genannter Verschiebungserweiterung entwickelt und in zwei Führungsteile verzweigt, die sich entlang eine Kreuzrichtung entlang ähnlichen Radialrichtungen entwickeln, zum Beispiel entlang dem Uhrzeigersinn oder entlang verschiedenen Radialrichtungen, entlang einem anderen Teil von genannter Verschiebungserweiterung.

9. Anzapfgerät (1) gemäß einem der Ansprüche 1 bis 8 **dadurch gekennzeichnet, dass** genannter erster Teleskopteil (11) in seinem Abwärtsstromteil in Richtung stromaufwärts vorhanden ist, mit einer Eingangsöffnung (110) so angepasst, um die Einführung von einer Dosispackung (2) zu ermöglichen, und in seinem Aufwärtsstromteil in Richtung stromabwärts vorhanden ist, mit einer Ausgangsöffnung (111) so angepasst, um den Ausgang von genannter Dosispackung (2) zu ermöglichen.

10. Anzapfgerät (1) gemäß Anspruch 9 **dadurch gekennzeichnet, dass** genannter erster Teleskopteil (11) so gestaltet ist, dass er eine Dosispackung (2) durch eine entsprechende Eingangsöffnung (110) empfangen kann, wenn in genannter offenen Position (A), und entlang mindestens teils der Außenoberfläche von genanntem zweiten Teleskopteil (12) bis zu einer geschlossenen Position (B) bewegt werden kann, wo die Dosispackung (2) durch die eingeengte Aufwärtsstromabteilung (122) von genanntem zweiten Teleskopteil (12) befestigt ist, versorgt mittels Einspritzung von Druckflüssigkeit, und durch die eingeengte Abwärtsstromabteilung (112) von genanntem ersten Teleskopteil (11), versorgt mittels Getränkeansammlungen und in flüssiger Verbindung mit dem Getränkeabfluss (31), und dass genannter zweiter Teleskopteil (12) Vorbehaltsmittel (5) darstellt, so angepasst, dass sie den Durchfluss von genannter Dosispackung (2) in einer Bewegung in Richtung stromaufwärts ermöglichen, zu einer Position in der Nähe von der eingeengten Aufwärtsstromabteilung (122) von genanntem Teleskopteil (12).

11. Anzapfgerät (1) gemäß einer der vorigen Ansprüche **dadurch gekennzeichnet, dass** genannter erster Teleskopteil (11) zur Verbindung mit einem Betätigungselement (3) angepasst ist, gestaltet in zylindrischer Röhrenform und stellt einen Getränkeabfluss (31) dar und vorzugsweise ein Betätigungselement vorhanden in Operationsverbindung mit einem Steuerungsgerät von der Getränkezubereitungsmaschine und versorgt mindestens die Startfunktion von Getränkezubereitungszyklen.

12. Vorgang der Tätigkeit eines Anzapfgeräts (1) versorgt, um eine einzelne Dosispackung (2) in einem System (20) zur Getränkezubereitung anzuzapfen, einschließlich folgende Schritte:
- Versorgung eines Anzapfgeräts (1), das ein erster und zweiter Teleskopteil (11, 12) in einer offenen Position (A) darstellt;
- Einführung einer Dosispackung (2) durch eine Eingangsöffnung (110) vorhanden an genanntem ersten Teleskopteil (11), so dass er sich in Nähe von einer entsprechenden Abwärtsstromabteilung (112) ergibt;
- Anwendung einer Antriebskraft auf genanntem ersten Teleskopteil (11), so dass genannter erster Teleskopteil (11) zwischen der offenen Position (A) und der geschlossenen Position (B) bewegt wird, entlang mindestens teils des genannten zweiten Teleskopteil (12), somit um genannte Dosispackung (2) in Befestigungsart gegen eine Aufwärtsstromabteilung (122) von genanntem zweiten Teleskopteil (12) einzuwirken,
- Belieferung eines Druckflüssigkeitsstroms durch genannte Aufwärtsstromabteilung (122) von genanntem zweiten Teleskopteil (12),
- Ansammlung des entstehenden Getränks durch genannte Abwärtsstromabteilung (112) von genanntem ersten Teleskopteil (11),
**dadurch gekennzeichnet, dass** genannte Anwendung einer Antriebskraft eine lineare Bewegung gefolgt von einer Drehbewegung von genanntem ersten Teleskopteil (11) erzeugt, vorhanden in Teleskopanordnung mit einem zweiten Teleskopteil entlang einer Bewegung in allgemeiner Aufwärtsstromrichtung.

13. Vorgang gemäß Anspruch 12 **dadurch gekennzeichnet, dass** die Anwendung der Antriebskraft eine Drehbewegung von genanntem ersten Teleskopteil (11) um seine zentrale Längsachse herum einschließt, in der Endzone des Bewegungsweges, so um eine mechanische Blockierung in der geschlossenen Position (B) zu versorgen, und umgekehrt.

14. Vorgang gemäß Ansprüche 12 oder 13 **dadurch gekennzeichnet, dass** es weiterhin folgende Schritte einschließt:
- Anwendung einer Antriebskraft auf genanntem ersten Teleskopteil (11), um eine Drehbewegung gefolgt von einer linearen Bewegung entlang einer allgemeinen Abwärtsstromrichtung zu erzeugen, so dass genannter erster Teleskopteil (11) zwischen der geschlossenen Position (B) und der offenen Position (A) bewegt wird, somit um die Ausgangsöffnung (111) unterhalb genannte Dosispackung (2) zu bringen,
- Festhaltung von genannter Dosispackung (2) in der nahelegenden Position von der Aufwärtsstromabteilung (122) von genanntem zweiten Teleskopteil (12) mittels Vorbehaltsmitteln (5);
- Ausstoßen von genannter Dosispackung (2) mittels Schwerkraft durch genannte Ausgangsöffnung (111), vorhanden im inneren Bereich von genanntem ersten Teleskopteil (11).

15. Vorgang gemäß Ansprüche 12 bis 14 **dadurch gekennzeichnet, dass** es weiterhin den Drehungsschritt von genanntem ersten Teleskopteil (11) um seine zentrale Längsachse herum einschließt, so um ihn in der geschlossenen Position (B) gegen der Tätigung eines Hilfskraftmittels (4) festzuhalten, vorhanden stromaufwärts und umgekehrt.

## Revendications

1. Dispositif d'extraction (1) adapté à la préparation de breuvages à partir d'au moins une substance consommable, contenue dans un emballage en portion (2), et présentant un arrangement de type télescopique, comprenant une première et une seconde partie télescopique (11, 12) d'une forme substantiellement tubulaire cylindrique le long d'un axe longitudinal, adapté afin que ladite première partie télescopique (11) puisse être déplacée le long d'une extension de déplacement le long de la direction longitudinale, au moins en partie, le long d'au moins une partie de l'extension de ladite deuxième partie télescopique (12), fournie fixée, entre une position ouverte (A) où elle est au moins en partie plus loin en aval et une position fermée (B), et définit donc un espace de type chambre, adapté à la collecte dudit emballage en portion (2), et vice-versa, **caractérisé**
**par le fait que** lesdites première et seconde parties télescopiques (11, 12) sont adaptées afin qu'entre lesdites positions ouverte (A) et fermée (B), ladite première partie télescopique (11) puisse effectuer une séquence du mouvement de translation le long de ladite extension de déplacement le long de la direction longitudinale, et un mouvement de rotation autour dudit axe longitudinal commun, afin qu'il soit retenu au moyen d'un blocage dans la position fermée correspondante (B) et vice-versa, entre ladite position fermée (B) et la position ouverte (A).

2. Dispositif d'extraction (1) selon la revendication 1, **caractérisé par le fait que** la première et seconde partie télescopique (11, 12) sont adaptés afin de fournir un mouvement de translation dans une extension de déplacement le long de la direction longitudinale d'une dimension similaire, de préférence 1,4 fois plus petit qu'une dimension caractéristique dudit emballage en portion (2), de préférence plus petit que 30 mm.

3. Dispositif d'extraction (1) selon la revendication 1 ou 2, **caractérisé par le fait que** la première et la seconde partie télescopique (11, 12) sont adaptées afin de fournir un mouvement de rotation de la dite première partie télescopique (11) par au moins un angle de rotation adapté afin de fournir à l'usager, la perception d'une position finale de mouvement, de préférence un angle de rotation d'au moins 100°, fournissant ainsi un blocage de rétention de la dite première partie télescopique (11) dans une position fermée (B) dans laquelle ladite première partie télescopique (11) est tournée relativement au mentionné mouvement de translation.

4. Dispositif d'extraction (1) selon les revendications 1 à 3, **caractérisé par le fait que** la première et la seconde partie télescopique (11, 12) sont adaptées afin qu'une force motrice soit appliquée directement sur la dite première partie télescopique (11) d'une manière motorisée ou manuelle, où ladite première partie télescopique (11) est fournie en connexion avec au moins l'un des éléments d'actionnement (3), fourni comme poignée ou comme moteur électrique, pour application ou création de ladite force motrice.

5. Dispositif d'extraction (1) selon la revendication 4, **caractérisé par le fait qu'**il est fourni avec des moyens de force auxiliaire (4) adapté afin qu'ils puissent générer une force complémentaire qui favorise ou résiste automatiquement au mouvement de ladite partie télescopique de ladite première partie télescopique (11) sous l'action de ladite force motrice le long d'au moins une partie de l'extension longitudinale de ladite seconde partie télescopique (12).

6. Dispositif d'extraction (1), selon une quelconque revendication 5, **caractérisé par le fait qu'**il est adapté de manière à ce qu'avec des moyens d'application d'une force motrice directement sur ladite première partie télescopique (11), cette dernière se déplace de l'amont entre la position ouverte (A) et la position fermée (B), contre la force complémentaire générée par lesdits moyens de force auxiliaire (4) et au moyen d'application d'une force motrice directement sur ladite première partie télescopique, cette dernière se déplace en aval entre ladite position fermée (B) et la position ouverte (A), parallèlement à la force complémentaire générée par lesdits moyens de force auxiliaire (4).

7. Dispositif d'extraction (1) selon une quelconque revendication entre 1 et 6, **caractérisé par le fait qu'**au moins lesdites première et seconde parties télescopiques (11, 12) présentent des guides de déplacement (121), fournis respectivement sur les surfaces intérieure et extérieur, où lesdits guides de déplacement (121) incluent une partie guide se développant le long de la direction longitudinale le long d'une partie de ladite extension de déplacement et au moins une partie guide se développant le long d'une direction transversale, le long d'une autre partie de ladite extension de déplacement.

8. Dispositif d'extraction (1) selon une quelconque revendication entre 1 et 7, **caractérisé par le fait qu'**au moins la première ou de la seconde partie télescopique (11, 12) présentent des guides de déplacement (121), comprenant une partie guide se développant le long de la direction longitudinale le long de la partie de ladite extension de déplacement et se déployant dans deux parties guide, se développant le long d'une direction transversale, le long de directions radiales similaires, comme par exemple, le long du sens des aiguilles d'une montre, ou le long de directions radiales différentes, le long d'une autre partie de ladite extension de déplacement.

9. Dispositif d'extraction (1) selon une quelconque revendication entre 1 et 8, **caractérisé par le fait que** ladite première partie télescopique (11) est fournie, dans sa partie en aval, orientée vers le haut, avec une ouverture en entrée (110), adaptée afin de permettre l'introduction d'un emballage en portion (2) et il est fourni dans sa partie en amont orientée vers le bas avec une ouverture en sortie (111), adaptée afin de permettre la sortie dudit emballage en portion (2).

10. Dispositif d'extraction (1) selon la revendication 9, **caractérise par le fait que** ladite première partie télescopique (11) est configurée afin qu'elle puisse recevoir un emballage en portion (2) à travers une ouverture de l'entrée respective (110), lorsque qu'elle est dans ladite position ouverte (A) et peut être déplacée le long d'au moins une partie de la surface extérieure de la dite seconde partie télescopique (12), jusqu'à une position fermée (B) où l'emballage en portion (2) est fixé par la section confinant en amont (122) de la dite seconde partie télescopique (12), fournie avec des moyens d'injection de liquide pressurisé, et par la section confinant en aval (112) de la dite première partie télescopique (11), fournie avec des moyens de collecte de breuvage et dans la connexion du liquide avec la décharge de breuvage (31) et dans ladite seconde partie télescopique, (12) sont présente des moyens de rétention (5) adaptés afin qu'ils permettent le passage dudit emballage en portion (2) dans un mouvement dans une direction en amont, vers une position de proximité de la section confinant en amont (122) de ladite partie télescopique (12).

11. Dispositif d'extraction (1) selon une quelconque revendication antérieure, **caractérisé par le fait que** ladite première partie télescopique (11) est adaptée à la connexion à un élément d'actionnement (3), configuré dans une forme tubulaire cylindrique et présentant une décharge de breuvage (31) et de préférence un élément d'actionnement fourni dans une connexion opérationnelle avec un Dispositif de contrôle de la machine de préparation du breuvage et au moins fournissant la fonction de départ des cycles de préparation du breuvage.

12. Processus d'opération d'un Dispositif d'extraction (1) fourni pour l'extraction d'un emballage en portion individuelle (2) dans un système (20) pour la préparation de breuvages, comprenant les étapes suivantes:
- fournir un Dispositif d'extraction (1) présentant une première et une seconde partie télescopique (11, 12) dans une position ouverte (A) ;
- introduire un emballage en portion (2) à travers une ouverture d'entrée (110) fourni dans ladite première partie télescopique (11) afin qu'il résulte en proximité de la respective section confinant en aval (112);
- appliquer une force motrice sur ladite première partie télescopique (11) afin que ladite première partie télescopique (11) soit déplacée entre la position ouverte (A) et la position fermée (B), le long d'au moins une partie de ladite seconde partie télescopique (12), empiétant ainsi l'emballage en portion (2) dans une forme fixe contre une section confinant en amont (122) de ladite seconde partie télescopique (12),
- fournir une circulation d'un liquide pressurisé à travers ladite section confinant en amont (122) de ladite seconde partie télescopique (12),
- recueillant le breuvage résultant à travers ladite section confinant en aval (112) de ladite première partie télescopique (11),
**caractérisée par le fait que** ladite application de la force motrice génère un mouvement linéaire suivi par un mouvement de rotation de ladite première partie télescopique (11), fournie dans un arrangement télescopique avec une seconde partie télescopique, le long d'un mouvement dans la direction générale en amont.

13. Processus selon la revendication 12, **caractérisé par le fait que** l'application de la force motrice inclut un mouvement de rotation de ladite première partie télescopique (11) autour de l'axe longitudinal central, dans la zone finale de la trajectoire du mouvement, afin de fournir un blocage mécanique de celui-ci dans la position fermée (B) et vice-versa.

14. Processus selon les revendications 12 ou 13, **caractérisé par le fait qu'**il inclut également les étapes suivantes :
- application d'une force motrice sur ladite première partie télescopique (11) afin de générer un mouvement de rotation suivi par un mouvement linéaire le long d'un mouvement général en aval, afin que ladite première partie télescopique (11) soit déplacée entre la position fermée (B) et la position ouverte (A), entraînant donc l'ouverture de la sortie (111) en dessous de l'emballage en portion (2),
- rétention dudit l'emballage en portion (2) en position de proximité de la section confinant en amont (122) de ladite seconde partie télescopique (12), au moyen de moyens de rétention (5);
- éjection dudit emballage en portion (2) au moyen de la force de gravité à travers ladite ouverture de la sortie (111), fournissant dans zone inférieure de ladite première partie télescopique (11) .

15. Processus selon les revendications de 12 à 14, **caractérisé par le fait qu'**il inclut aussi l'étape de rotation de ladite première partie télescopique (11) autour de l'axe longitudinal central, afin de le retenir dans la position fermée (B) contre l'action des moyens de force auxiliaire (4) fournis en amont de ceux-ci, et vice-versa.
